# EUROPÄISCHE PATENTANMELDUNG

(11) **EP 4 826 377 A1**
(43) Veröffentlichungstag der Anmeldung: **21.10.2026**
(21) Anmeldenummer: 25171130.5
(22) Anmeldetag: 16.04.2025
(51) Int. Cl.: G01N 30/72, H01J 49/16

(54) **ELEKTROSPRAY-PROBENQUELLE ZUR ANBINDUNG AN EIN MASSENSPEKTROMETER UND ANALYSEVERFAHREN**

(71) Anmelder: MSPhysix GmbH, 4153 Reinach (BL) (CH)
(72) Erfinder: DÖBELIN, Werner, 4153 Reinach (CH)
(74) Vertreter: Körner, Thomas Ottmar

(57) **Zusammenfassung**

Elektrospray-Probenquelle zur Anbindung an ein Massenspektrometer, insbesondere mit einem Atmospheric Pressure Inlet, API, umfassend:
a. eine erste Chromatographiesäule (5), die sich parallel zu einer Längsrichtung (L) erstreckt;
b. eine zweite Chromatographiesäule (5'), die sich zumindest im Wesentlichen parallel zu der Längsrichtung erstreckt;
c. wobei an der ersten und zweiten Chromatographiesäule je ein Probeneingang vorgesehen ist, an welchem eine Probenzuleitung (6, 6') anschliessbar ist, insbesondere mittels eines Verbindungsstücks (7, 7');
d. wobei an der ersten und zweiten Chromatographiesäule je eine Ionenspray-Spitze (11, 11'), insbesondere je eine elektrisch leitfähige Kapillare, am und/oder als Probenausgang vorgesehen ist;
e. eine Positioniervorrichtung, die dazu ausgelegt ist, die erste und/oder zweite Chromatographiesäule in mindestens einer Richtung orthogonal zur Längsrichtung zu verschieben und/oder positionieren, um insbesondere wahlweise und/oder abwechselnd die erste oder zweite Chromatographiesäule an einer aktiven Position vor und/oder gegenüber einem Ioneneingang des Massenspektrometers zu positionieren, und die jeweils andere Chromatographiesäule an einer ersten oder zweiten inaktiven Position zu positionieren, welche bezüglich mindestens einer Richtung orthogonal zur Längsrichtung relativ zum Ioneneingang beabstandet ist;
f. eine Heizvorrichtung, insbesondere ein Ofen, zum Erwärmen und/oder Temperieren der beiden Chromatographiesäulen;
g. ein Spannungsanschluss, welcher insbesondere an der Heizvorrichtung vorgesehen ist, wobei der Spannungsanschluss insbesondere dazu ausgelegt ist, eine Hochspannung zwischen den Ionenspray-Spitzen und dem Ioneneingang und/oder zwischen einer mobilen Phase in den Chromatographiesäulen und dem Ioneneingang anzulegen.

## Beschreibung

Die Erfindung bezieht sich auf das Gebiet der Analytik, insbesondere auf die Analyse biologischer, chemischer und/oder medizinischer Proben. Sie betrifft eine Elektrospray-Probenquelle zur Anbindung an ein Massenspektrometer gemäss Anspruch 1 sowie ein Analyseverfahren umfassend Flüssigchromatographie mit nachgeschalteter Massenspektrometrie gemäss Anspruch 13.

### Technologischer Hintergrund

Massenspektrometrie (MS), wie beispielsweise in den Wikipedia-Artikeln https://en.wikipedia.org/w/index.php?title=Mass spectrometry&oldid=1263200735 und https://de.wikipedia.org/w/index.php?title=Massenspektrometrie&oldid=254617042 beschrieben, findet in vielen Bereichen Anwendung. Eingesetzt wird sie demgemäss unter anderem bei der Charakterisierung von chemischen Verbindungen, in der Biochemie zur Untersuchung von Biomolekülen, in der medizinischen Chemie zur Identifizierung von Substanzen in Körperflüssigkeiten oder Organen, in kriminaltechnischen Untersuchungen, bei Dopingkontrollen, in der Umweltanalytik, in der Analytik von chemischen Kampfstoffen und Sprengstoffen sowie zur Bestimmung des Edelmetallanteils in Legierungen.

Um die Analyse aus der Massenspektrometrie erhaltener Daten zu verbessern, zu vereinfachen und/oder überhaupt zu ermöglichen, wird insbesondere bei biologischen oder biochemischen Proben der Massenspektrometrie ein anderes Trennverfahren vorgeschaltet, in welchem eine Probe zunächst in mehrere Bestandteile aufgeteilt wird. Häufig wird dabei auf Chromatographie-Verfahren zurückgegriffen, wie insbesondere in den Wikipedia-Artikeln https://en.wikipedia.org/w/index.php?title=Chromatography&oldid=1274759735 und https://de.wikipedia.org/w/index.php?title=Chromatographie&oldid=251920648 beschrieben. Da biologische oder biochemische Proben in der Regel bereits in flüssiger Form oder als flüssige Lösung vorliegen, kommt dabei vorzugsweise Flüssigchromatographie (LC) zur Anwendung, häufig in Form der sogenannten Hochleistungsflüssigkeitschromatographie, wie insbesondere im Wikipedia-Artikel https://en.wikipedia.org/w/index.php?title=High-performance liquid chromatography&oldid=1273906572 beschrieben.

Die Kombination aus Flüssigchromatographie mit nachgeschalteter Massenspektrometrie wird auch als Flüssigchromatographie mit Massenspektrometrie-Kopplung (LC-MS) bezeichnet, und ist beispielsweise im Wikipedia-Artikel https://en.wikipedia.org/w/index.php?title=Liquid chromatography%E2%80%93mass spectrometry&oldid=1281257418 beschrieben. Flüssigchromatographie- und Massenspektrometrie-Vorrichtungen sind demnach grundlegend inkompatibel:
Während eine mobile Phase in einer LC-Vorrichtung eine Flüssigkeit umfasst, welche unter Druck steht, arbeiten MS-Analysegeräte in der Regel unter Hochvakuum. Daher ist es nicht möglich, die mobile Phase direkt von der LC-Vorrichtung in die MS-Vorrichtung zu leiten. Vielmehr wird eine geeignete Schnittstelle benötigt. Bei einer weit verbreiteten Schnittstelle wird die aus einer Chromatographie-Vorrichtung (unter Flüssigkeitsdruck) austretende mobile Phase, insbesondere ein Eluat, einer Elektrospray-Ionisation (ESI) unterworfen, wie beispielsweise im Wikipedia-Artikel https://en.wikipedia.org/w/index.php?title=Electrospray ionization&oldid=1017401262 beschrieben. Bei der Elektrospray-Ionisation können Moleküle oder Molekülbestandteile aus der Probe ausserhalb eines Vakuums, insbesondere unter atmosphärischem Druck und/oder Umgebungsdruck, ionisiert werden und direkt in oder unmittelbar vor einen loneneingang einer Massenspektrometrie-Vorrichtung (in verkürzter Form auch als Massenspektrometer bezeichnet) verbracht werden. Die Ionisierung unter atmosphärischem Druck bezeichnet man allgemein auch als "atmospheric pressure ionization", kurz API.

Insbesondere im Bereich der sogenannten nano-Flüssigchromatographie mit Probenvolumina im nano-Liter-Bereich und entsprechend geringen Probenmengen ist eine sorgfältige Einrichtung der Schnittstelle, insbesondere mit einer exakten Positionierung eines Ausgangs der LC-Vorrichtung, aus welcher die mobile Phase austritt, relativ zum Ioneneingang der Massenspektrometrie-Vorrichtung erforderlich, um einen Verlust von Probenmaterial zu verhindern. Ähnliches gilt für die sogenannte mikro-Flüssigchromatographie, wenn auch in etwas geringerem Ausmass. Eine für die Einrichtung erforderliche manuelle Handhabung kann fehleranfällig sein und somit die insbesondere eine Reproduzierbarkeit von Messungen und/oder Analysen beeinträchtigen.

Um Verunreinigungen und aus diesen resultierende Fehler in der massenspektrometrischen Analyse zu vermeiden, muss zwischen zwei aufeinanderfolgenden Analysen eine Reinigung und/oder Spülung der Flüssigchromatographie-Vorrichtung, insbesondere der stationären Phase der Flüssigchromatographie-Vorrichtung (welche auch als Chromatographie-Säule bezeichnet wird), erfolgen. Teilweise ist anschliessend eine sogenannte Equilibrierung erforderlich. Ferner muss ausgeschlossen werden, dass Ionen, die nicht aus der mobilen Phase stammen, in die Massenspektrometrie-Vorrichtung gelangen.

Soll die Chromatographie-Vorrichtung dauerhaft an und/oder vor einer Einspeiseposition oder aktiven Position der Massenspektrometrie-Vorrichtung verbleiben, kann letztere während der Reinigung, Spülung und/oder Equilibrierung der ChromatographieSäule nicht für Analyse-Zwecke genutzt werden. Eine resultierende Totzeit kann dabei durchaus eine für die Durchführung einer MS-Analyse benötigte Analysedauer übersteigen.

Es ist deswegen Aufgabe der Erfindung, eine Elektrospray-Probenquelle anzugeben, die insbesondere an ein Massenspektrometer angebunden werden kann, und welche die vorstehend genannten Nachteile und Schwachpunkte zu eliminieren oder zumindest zu reduzieren erlaubt.

### Kurze Beschreibung der Erfindung

Eine erfindungsgemässe Elektrospray-Probenquelle wie in den nachstehenden Patentansprüchen beansprucht kann die Merkmale von Anspruch 1 umfassen.

Eine erfindungsgemässe Elektrospray-Probenquelle zur Anbindung an ein Massenspektrometer kann umfassen:
a. eine erste Chromatographiesäule (5), die sich parallel zu einer Längsrichtung (L) erstreckt;
b. eine zweite Chromatographiesäule (5'), die sich zumindest im Wesentlichen parallel zu der Längsrichtung erstreckt;
c. wobei an der ersten und zweiten Chromatographiesäule je ein Probeneingang vorgesehen ist, an welchem eine Probenzuleitung (6, 6') anschliessbar ist, insbesondere mittels eines Verbindungsstücks (7, 7');
d. wobei an der ersten und zweiten Chromatographiesäule je eine Ionenspray-Spitze (11, 11'), insbesondere je eine elektrisch leitfähige Kapillare, am und/oder als Probenausgang vorgesehen ist;
e. eine Positioniervorrichtung, die dazu ausgelegt ist, die erste und/oder zweite Chromatographiesäule in mindestens einer Richtung orthogonal zur Längsrichtung zu verschieben und/oder positionieren, um insbesondere wahlweise und/oder abwechselnd die erste oder zweite Chromatographiesäule an einer aktiven Position vor und/oder gegenüber einem Ioneneingang des Massenspektrometers zu positionieren, und die jeweils andere Chromatographiesäule an einer ersten oder zweiten inaktiven Position zu positionieren, welche bezüglich mindestens einer Richtung orthogonal zur Längsrichtung relativ zum Ioneneingang beabstandet ist;
f. eine Heizvorrichtung, insbesondere ein Ofen, zum Erwärmen und/oder Temperieren der beiden Chromatographiesäulen;
g. einen Spannungsanschluss, welcher insbesondere an der Heizvorrichtung vorgesehen ist, wobei der Spannungsanschluss insbesondere dazu ausgelegt ist, eine Hochspannung zwischen den Ionenspray-Spitzen und dem Ioneneingang und/oder zwischen einer mobilen Phase in den Chromatographiesäulen und dem Ioneneingang anzulegen.

Die erste und zweite Chromatographiesäule können die erste bzw. zweite stationäre Phase einer ersten bzw. zweiten Flüssigchromatographie-Vorrichtung bilden bzw. umfassen, und können insbesondere zumindest im Wesentlichen parallel zueinander und parallel zu einer Längsrichtung L ausgerichtet sein, insbesondere derart, dass die mobilen Phasen während eines Betriebs der Probenquelle in Richtung der positiven Längsrichtung L transportiert, insbesondere gepumpt, werden. Die Chromatographiesäulen können insbesondere je einen ersten Zylinder umfassen, dessen Längsachse parallel zur Längsrichtung L verläuft, und in dessen Inneren sich Feststoff-Partikel, insbesondere aus einem adsorbierenden Material, befinden. Jeder erste Zylinder kann elektrisch leitend, insbesondere aus einem metallischen Material gefertigt, sein oder eine elektrisch leitende Beschichtung aufweisen, insbesondere an einer Innenseite besagten ersten Zylinders. Bei den Chromatographiesäulen kann es sich insbesondere um Säulen für die nano-Flüssigchromatographie handeln. Diese können insbesondere einen ersten Zylinder in Form einer Quartzglas-Kapillare ("fused silica capillary") umfassen, in welcher die stationäre Phase eingefüllt ist, und insbesondere mittels Filtern und/oder Sieben an einem oder beiden Enden der Kapillare zurückgehalten wird. Die Quartzglas-Kapillare kann eine elektrisch leitende Beschichtung aufweisen, insbesondere an deren Innenseite.

Die mobile Phase - und mit ihr ein Probenmaterial - kann den Chromatographiesäulen durch jeweils einen Probeneingang zugeführt werden, der an einem ersten und/oder vorderen Ende jeder Chromatographiesäule vorgesehen ist. Die Zuführung kann insbesondere über je eine Probenzuleitung erfolgen, deren erstes Ende an jeweils einem Probeneingang, insbesondere mittels einer fluid- und/oder druckdichten Verbindung, angeschlossen ist, wobei ein zweites Ende der jeweiligen Probenzuleitung mit einer Probenversorgungs-Vorrichtung verbindbar sein kann. Dabei kann je ein Verbindungsstück an jedem Probeneingang vorgesehen sein und/oder den jeweiligen Probeneingang bilden, an welchem Verbindungsstück ein Anschluss für die jeweilige Probenzuleitung vorgesehen sein kann. Das Verbindungsstück kann elektrisch leitend sein, insbesondere einen elektrisch leitenden, insbesondere metallischen, zweiten Zylinder umfassen, an welchem der Anschluss, der insbesondere ein Schraubgewinde umfassen kann, ausgebildet sein kann; und in welchen zweiten Zylinder der erste Zylinder fluid- und/oder druckdicht eingepasst und oder eingeklebt sein kann.

An der ersten und zweiten Chromatographiesäule kann je eine Ionenspray-Spitze vorgesehen sein. Diese kann integral und/oder einstückig mit dem ersten Zylinder der jeweiligen Chromatographiesäule ausgebildet sein. Alternativ kann je eine separate und/oder auswechselbare Ionenspray-Spitze an einem dafür eingerichteten Ausgang für die mobile Phase einer jeden Chromatographiesäule abnehmbar montiert sein, welche Ionenspray-Spitze insbesondere je eine Quartzglas-Kapillare umfassen kann, die ebenfalls eine elektrisch leitende Beschichtung aufweisen, insbesondere an ihrer Innenseite.

Um ein Erwärmen und/oder Temperieren der Chromatographiesäulen zu ermöglichen, können eine oder mehrere Heizvorrichtung vorgesehen sein, wobei jede Chromatographiesäule insbesondere über eine eigene Heizvorrichtung verfügen kann. Vorzugsweise ist jedoch ein Säulenofen mit einem heizbaren Innenraum vorgesehen, in welchem die beiden Chromatographiesäulen an einer definierten Position montiert sind, insbesondere in fester räumlicher Beziehung zueinander und zum Ofen. Die ein oder mehreren Heizvorrichtungen können insbesondere dazu ausgelegt sein, die Chromatographiesäulen während einer Analyse auf einer Temperatur zwischen 40°C und 80°C zu halten.

Der Spannungsanschluss dient dazu, eine Spannung, insbesondere eine Hochspannung im Bereich von etwa 1 bis 5 kV, zwischen den Ionenspray-Spitzen und/oder den mobilen Phasen in den Chromatographiesäulen auf der einen Seite und dem Ioneneingang des Massenspektrometers auf der anderen Seite anzulegen. Die Hochspannung kann positives oder negatives Vorzeichen haben; insbesondere kann auch der Spannungsanschluss geerdet sein und der Ioneneingang des Massenspektrometers auf positive oder negative Spannung gelegt sein bzw. sich auf positivem oder negativem Potential befinden. Für elektrisch leitfähige, insbesondere saure, mobile Phasen kann die Hochspannung dabei im Bereich des Probeneingangs einer jeden Chromatographiesäule angelegt werden, insbesondere am (elektrisch leitenden) Verbindungsstück. Alternativ oder zusätzlich kann zwischen dem Spannungsanschluss und jeder der Ionenspray-Spitzen eine elektrisch leitende Verbindung in an sich bekannter Weise, z.B. in Form einer Verkabelung, vorgesehen sein.

Die Längsrichtung L kann insbesondere parallel zu einer x-Achse eines rechtwinkligen (xyz-)Koordinatensystems verlaufen, und die gleiche Orientierung aufweisen wie besagte x-Achse, wobei die Längsrichtung insbesondere von vorne nach hinten orientiert betrachtet werden kann. Die Positioniervorrichtung kann dazu ausgelegt sein, die erste und/oder zweite Chromatographiesäule in mindestens einer Richtung orthogonal zur Längsrichtung L, insbesondere in y- und/oder z-Richtung zu verschieben und/oder positionieren, um insbesondere wahlweise und/oder abwechselnd die erste oder zweite Chromatographiesäule an der aktiven Position zu positionieren, und die jeweils andere Chromatographiesäule an der ersten oder zweiten inaktiven Position zu positionieren. Die aktive Position kann sich vor und/oder gegenüber einem Ioneneingang des Massenspektrometers befinden, wobei ein Ausgang und/oder eine Ausgangsöffnung der lonenspray-Spitze und der Ioneneingang des Massenspektrometers, insbesondere eine Eingangsöffnung des Ioneneingangs, sich an identischen Positionen bezüglich der y- und z-Achsen befinden. Die Ionenspray-Spitze und der Ioneneingang des Massenspektrometers, insbesondere eine Eingangsöffnung des Ioneneingangs, können dabei insbesondere ausschliesslich bezüglich der Längsrichtung L voneinander beabstandet sein, nicht jedoch bezüglich irgendeiner orthogonal zur Längsrichtung verlaufenden Richtung.

Wenn sich die erste oder zweite Chromatographiesäule an der aktiven Position befindet, kann eine erste bzw. zweite Längsachse L' der jeweiligen Säule und/oder der zugehörigen Ionenspray-Spitze mit einer dritten Längsachse L" des Ioneneingangs zusammenfallen.

Jede inaktive Position kann bezüglich der y- und/oder z-Richtung gegenüber der aktiven Position und gegenüber der Position des Ioneneingangs des Massenspektrometers, insbesondere der Eingangsöffnung des Ioneneingangs, beabstandet sein.

Die Positioniervorrichtung kann ferner dazu ausgelegt sein, die erste und/oder zweite Chromatographiesäule und/oder die Heizvorrichtung bezüglich der Längsrichtung L bzw. der x-Achse zu verschieben und/oder positionieren. Dies erlaubt, eine Entfernung *d*_{L} bezüglich der Längsrichtung L zwischen der Ionenspray-Spitze der an der aktiven Position befindlichen Chromatographiesäule und dem Ioneneingang des Massenspektrometers zu variieren und/oder anzupassen, wodurch insbesondere eine Ausbeute an Ionen aus dem Elektrospray, die durch den Ioneneingang in den Massenspektrometer gelangen, zu optimieren. *d*_{L} kann dabei insbesondere zwischen 1mm und 1cm betragen, insbesondere wenige mm.

Die Positioniervorrichtung kann insbesondere eine x-y-Robotik oder einen x-y-Positioniertisch umfassen. Sie kann insbesondere einen Grundkörper sowie ein relativ zum Grundkörper bewegliches, insbesondere beweglich gelagertes, Trägerelement umfassen, wobei eine Position des Trägerelements relativ zum Grundkörper veränderbar, insbesondere mittels mindestens eines Antriebs verstellbar, sein kann und wobei das Trägerelement starr mit der Heizvorrichtung, insbesondere dem Ofen und/oder den beiden Chromatographiesäulen verbunden sein bzw. verbindbar sein kann. Der Grundkörper kann an einer relativ zum Massenspektrometer definierten Position befestigt und oder anderweitig montiert sein.

Der Grundkörper kann starr mit einer Adaptereinheit verbunden und/oder verbindbar sein, welche als Teil der Elektrospray-Probenquelle vorgesehen sein kann, und welche in einer definierten Position relativ zum Ioneneingang eines Massenspektrometers an diesem befestigt, insbesondere angeschraubt und/oder angeflanscht zu werden, insbesondere um die Elektrospray-Probenquelle am Massenspektrometer anzubinden.

Die Elektrospray-Probenquelle kann eine MS-Potentialplatte umfassen, welche zwischen den Chromatographiesäulen und dem Massenspektrometer platziert sein oder werden kann, und welche elektrisch leitend mit dem Ioneneingang verbindbar ist, um dasselbe Potential anzunehmen, welches am Ioneneingang anliegt. Die MS-Potentialplatte kann eine erste, insbesondere zumindest annähernd kreisförmige Öffnung umfassen, durch welche Ionen aus dem von der Chromatographiesäule an der aktiven Position ausgestossenen Elektrospray in den Ioneneingang und/oder in einen Innenraum des Massenspektrometers gelangen können, und/oder welche den Ioneneingang und/oder einen Kopf des Massenspektrometers, an welchem der Ioneneingang ausgebildet sein kann, zumindest teilweise umgibt, wenn die Elektrospray-Probenquelle am Massenspektrometer angebunden ist.. Die erste Öffnung kann bezüglich der y- und/oder z-Achsen relativ zum Ioneneingang des Massenspektrometers zentriert sein. Ein Mittelpunkt der ersten Öffnung kann auf der Längsachse des Ioneneingangs und/oder auf der Längsachse der Chromatographiesäule bzw. deren Ionenspray-Spitze liegen.

Die Elektrospray-Probenquelle kann eine Probenversorgungs-Vorrichtung umfassen, die dazu ausgelegt ist, der ersten und/oder der zweiten Chromatographiesäule eine erste bzw. zweite mobile Phase zuzuführen.

Die Probenversorgungs-Vorrichtung kann insbesondere dazu ausgelegt sein, die erste und zweite mobile Phase gleichzeitig der ersten bzw. zweiten Chromatographiesäule zuzuführen, so dass, insbesondere bei angelegter (Hoch-)spannung, aus der ersten und zweiten Chromatographiesäule gleichzeitig Elektrospray austritt. Jede mobile Phase kann dabei ein Eluent (teilweise auch als Solvent bezeichnet), Probenmaterial, eine Equilibrierflüssigkeit, eine Kalibrierlösung und/oder eine Reinigungslösung umfassen, wobei sich eine Zusammensetzung der ersten mobilen Phase von derjenigen der zweiten mobilen Phase unterscheiden kann. Probenmaterial kann dabei insbesondere dem Eluent beigemischt sein oder zugeführt werden. Die Zuführung der ersten und zweiten mobilen Phase insbesondere über eine erste bzw. eine zweite Probenzuleitung (6, 6') erfolgen, die an den jeweiligen Probeneingang der ersten bzw. zweiten Chromatographiesäule angeschlossen und/oder anschliessbar ist. Die Probenversorgungs-Vorrichtung kann insbesondere einen Probengeber wie in der EP 3679367 A1 beschrieben umfassen. Sie kann auch mehrere, separate Untereinheiten zur Zuführung von je einem oder einer Mehrfachauswahl von Eluent, Probenmaterial, Equilibrierflüssigkeit, Kalibrierlösung und/oder Reinigungslösung umfassen. Die Untereinheiten können jeweils eine Versorgungsleitung umfassen, wobei die Versorgungsleitungen über ein oder mehrere Mehrwegventile mit den Probenzuleitungen verbunden sein können, so dass jede Probenzuleitung selektiv mit jeder der Versorgungsleitungen und/oder jeder der Untereinheiten fluid- und/oder druckdicht verbunden werden kann.

Die Möglichkeit der gleichzeitigen Zuführung der mobilen Phasen an die beiden Chromatographiesäulen erlaubt es, diejenigen(n) Chromotographiesäule(n), die sich an der oder den inaktiven Position(en) befindet bzw. befinden, zu reinigen, spülen, equilibrieren etc., während der Chromatographiesäule an der aktiven Position Probenmaterial zugeführt wird und/oder aus deren Ionenspray-Spitze austritt. Eine Totzeit der Massenspektrometrie-Vorrichtung kann somit signifikant reduziert werden.

Die MS-Potentialplatte kann mindestens eine zweite Öffnung umfassen, deren Position bezüglich der y- und/oder z-Achsen zumindest annähernd der ersten inaktiven Position entspricht, so dass insbesondere die Ionenspray-Spitze einer sich an der ersten inaktiven Position befindlichen Chromatographiesäule der zweiten Öffnung gegenüberliegt. Als Position der zweiten Öffnung kann dabei insbesondere eine Position von deren Mittelpunkt angesehen werden. Das an der MS-Potentialplatte anliegende Potential des loneneingang sorgt dann dafür, dass Aufgrund des elektrischen Feldes zwischen der MS-Potentialplatte, insbesondere der zweiten Öffnung, und der Ionenspray-Spitze der Chromatographiesäule an der ersten inaktiven Position Ionen aus dem von dieser Chromatographiesäule ausgestossenen Elektrospray aufgrund elektrostatischer Kräfte durch die zweite Öffnung hindurch geleitet und damit gewissermassen abgesaugt werden. Dadurch kann verhindert werden, dass solche Ionen in den Ioneneingang des Massenspektrometers gelangen können, wo sie eine laufende Analyse stören würden.

Die MS-Potentialplatte kann eine weitere zweite Öffnung umfassen, deren Position bezüglich der bezüglich der y- und/oder z-Achsen zumindest annähernd der zweiten inaktiven Position entspricht, und die sich bezüglich einer Chromatographiesäule an der zweiten inaktiven Position und aus dieser ausgestossenem Elektrospray in analoger Weise verhält wie die weiter oben beschriebene zweite Öffnung.

Um Verunreinigungen durch Elektrospray, welches aus einer Chromatographiesäule austritt, die sich an einer inaktiven Position befindet, zu verhindern oder zu minimieren kann eine Abzugsvorrichtung vorgesehen sein oder die Elektrospray-Probenquelle zum Anschluss an eine Abzugsvorrichtung, insbesondere an einen Laborabzug, vorbereitet sein. Insbesondere kann Abzugsöffnung der Abzugsvorrichtung in einem Bereich hinter der MS-Potentialplatte vorgesehen sein, insbesondere an einer Unterseite der Elektrospray-Probenquelle und/oder in einem Bereich unterhalb der MS-Potentialplatte.

Entlang eines Randes der ersten Öffnung, insbesondere entlang des gesamten Randes besagter erster Öffnung, kann eine Austrittsöffnung ausgebildet sein, durch welche ein Schutzgas, insbesondere Stickstoff, in einer Richtung entgegen der Längsrichtung L geleitet und/oder geblasen werden kann, insbesondere in Richtung der Ionenspray-Spitze der sich an der aktiven Position befindlichen Chromatographiesäule. Die Austrittsöffnung kann eine Ringdüse bilden, die insbesondere dazu ausgelegt sein kann, einen Hohlstrahl aus Schutzgas zu erzeugen und/oder zu formen, der zumindest annähernd parallel einer axialen Richtung der Ringdüse verläuft und/oder strömt, wobei die axiale Richtung zumindest annähernd mit der Längsrichtung L zusammenfallen kann. Der Hohlstrahl kann somit einen Gasvorhang aus Schutzgas bilden, welcher den Ioneneingang, die Ionenspray-Spitze, und/oder einen Bereich zwischen Ioneneingang und lonenspray-Spitze umgibt und/oder umschliesst. Der Gasvorhang kann verhindern, dass Substanzen, insbesondere Ionen, aus einer (weiteren) Umgebung in den Ioneneingang gelangen, insbesondere Substanzen oder Ionen aus der mobilen Phase einer Chromatographiesäule an einer inaktiven Position.

Eine Entfernung *d*_{A} bezüglich der Längsrichtung L zwischen der Ionenspray-Spitze der an der aktiven Position befindlichen Chromatographiesäule und der Austrittsöffnung, einem der Ionenspray-Spitze zugewandten ersten Ende der ersten Öffnung und/oder einer der Ionenspray-Spitze zugewandten Oberfläche der MS-Potentialplatte kann kleiner sein als d_{L}, insbesondere mit *d*_{L} - *d*_{A} « *d_{L}.*

Die Entfernung *d*_{A} kann auch grösser sein als d_{L}, insbesondere mit *d*_{A} - *d*_{L} < *d*_{L}, vorzugsweise mit *d*_{A} - *d*_{L} « *d*_{L}. Durch eine derartige Wahl von *d*_{A} kann der Gasvorhang besonders effektiv verhindern, dass Substanzen, insbesondere Ionen, aus der (weiteren) Umgebung in den Ioneneingang gelangen. Ausserdem kann durch eine deratrige Wahl verhindert werden, dass ein elektrisches Feld im Bereich zwischen dem Ioneneingang und der Ionenspray-Spitze der sich an der aktiven Position befindlichen Chromatographiesäule durch ein elektrisches Feld zwischen Ionenspray-Spitze und MS-Potentialplatte ungünstig beeinflusst werden, und Ionen aus dem Elektrospray anstatt zum loneneingang zur MS-Potentialplatte geleitet werden.

Das Schutzgas kann vorgeheizt sein oder werden, insbesondere auf eine Temperatur zwischen 40°C und 120°C, wozu insbesondere ein Heizelement vorgesehen sein kann, beispielsweise in oder als Teil einer Zuleitung für das Schutzgas. Durch ein Vorheizen des Schutzgases kann einer Kühlung entgegengewirkt werden, die beim Austritt der mobilen Phase aus der Ionenspray-Spitze der Chromatographiesäule an der aktiven Position auftritt, und die unter anderem auf einen Druckabfall zurückzuführen senn kann, den die mobile Phase an der Spitze erfährt, und oder ein Verdampfen von Bestandteilen der mobilen Phase, insbesondere dem Eluent. Die Kühlung kann dabei den austretenden Teil der mobilen Phase und/oder die Ionenspray-Spitze betreffen. Insbesondere die Kühlung des austretenden Teils der mobilen Phase kann ein Verdampfen derselben, insbesondere eines flüchtigen Bestandteils derselben, aus im Elektrospray vorhandenen Tröpfchen verhindern, und somit eine Ionenausbeute reduzieren. Insbesondere die Kühlung der Ionenspray-Spitze kann eine in der Chromatographiesäule erfolgte Trennung von Probenmaterial teilweise wieder rückgängig machen. Das Vorheizen des Schutzgases kann die genannten Nachteile somit zumindest teilweise verhindern. Ein Volumenfluss des Schutzgases kann zwischen 1 l/min und 10 l/min betragen.

Als Teil der Elektrospray-Probenquelle, insbesondere der Adaptereinheit, kann ein Kontaktierungselement vorgesehen ist, welches eine elektrisch leitende Verbindung zwischen MS-Potentialplatte (26) und Ioneneingang erstellt, wenn die Elektrospray-Probenquelle an einen Massenspektrometer angebunden ist, insbesondere die Adaptereinheit am Massenspektrometer angeschraubt und/oder angeflanscht ist. Das Kontaktierungselement kann vollständig oder teilweise aus elektrisch leitendem Material, insbesondere aus einem Metall wie z.B. Aluminium gebildet sein, und mit der MS-Potentialplatte über eine lösbare Verbindung verbunden sein, beispielsweise mittels Schrauben oder über einen Bajonettverschluss. Das Kontaktierungselement kann für ein oder mehrere bestimmte Typen oder Modelle von Massenspektrometern angepasst sein, und kann insbesondere elektrisch leitende Kontaktierungsflächen aufweisen, welche mit einem Teil einer Oberfläche eines Gehäuses das Massenspektrometer unter Herstellung einer elektrisch leitenden Verbindung in physischen Kontakt gerät bzw. in physischem Kontakt steht, wenn die Elektrospray-Probenquelle an das Massenspektrometer angebunden wird oder ist. Bei vielen Typen oder Modellen von Massenspektrometern ist der loneneingang an einer Spitze eines Kegels oder Kegelstumpfs vorgesehen, der aus elektrisch leitendem Material gebildet ist, und einen Kopf des Massenspektrometers bilden kann. Die Kontaktierungsflächen können beispielsweise an den Spitzen (gefederter) Stifte ausgebildet sein, die mit dem Kegel(stumpf) in Berührung kommen, wenn die Elektrospray-Probenquelle an den Massenspektrometer angebunden ist. Die lösbare Verbindung kann es erlauben, das Kontaktierungselement auszutauschen, um die Erstellung der elektrisch leitenden Verbindung für verschiedene Typen oder Modelle von Massenspektrometern zu ermöglichen bzw. zu gewährleisten.

Die Austrittsöffnung, insbesondere die Ringdüse, für das Schutzgas kann zwischen der MS-Potentialplatte und dem Kontaktierungselement ausgebildet sein. Dazu kann die Kontaktierungsplatte ebenfalls eine Öffnung aufweisen, die bezüglich Form und Grösse zumindest annähernd der ersten Öffnung der MS-Potentialplatte entspricht, und die bei mit der MS-Potentialplatte verbundenem Kontaktierungselement hinter, insbesondere unmittelbar hinter, besagter erster Öffnung zu liegen kommt, wobei die beiden Öffnungen insbesondere relativ zueinander zentriert sein können. In der MS-Potentialplatte und/oder dem Kontaktierungselement können Vertiefungen, insbesondere in Form von Rinnen, vorgesehen sein, die dabei eine Zuleitung für das Schutzgas zur Ringdüse und/oder die Ringdüse selbst bilden.

Die Elektrospray-Probenquelle, insbesondere die Adaptereinheit, kann eine Kamera umfassen, mittels welcher eine Position der ersten und/oder zweiten Chromatographiesäule erfasst werden kann, insbesondere relative zum Ioneneingang. Dies ermöglicht eine exakte Positionierung der Chromatographiesäule an der aktiven Position, insbesondere unter Verwendung einer Regelung für die Positioniervorrichtung.

Ein erfindungsgemässes Massenspektroskopie-System kann die Merkmale von Anspruch 12 aufweisen.

Ein erfindungsgemässes Massenspektroskopie-System kann insbesondere eine Elektrospray-Probenquelle wie weiter oben beschrieben und/oder weiter unten beansprucht aufweisen sowie einen Massenspektrometer, insbesondere mit einem Atmospheric Pressure Inlet, API, wobei die Adaptereinheit der Elektrospray-Probenquelle in einer definierten Position relativ zum Ioneneingang eines Massenspektrometers an diesem befestigt, insbesondere angeschraubt und/oder angeflanscht, ist; wobei eine (dritte) Längsachse L" des Ioneneingangs und/oder des Massenspektrometers parallel zu einer ersten Längsachse L und/oder einer zweiten Längsachse L' der ersten oder zweiten Chromatographiesäule und/oder der zugehörigen Ionenspray-Spitze verlaufen kann. Die (dritte) Längsachse L" kann dabei insbesondere einer Symmetrieachse entsprechen, bezüglich welcher der Ioneneingang und/oder ein Kopf des Massenspektrometers zumindest annähernd rotationssymmetrisch ausgebildet ist; und kann insbesondere parallel zur x-Achse des weiter oben eingeführten rechtwinkligen (xyz-)Koordinatensystems verlaufen.

Das Massenspektrometer kann einen Ioneneingang aufweisen, der als Atmospheric Pressure Inlet, API ausgestaltet sein oder einen Teil eines API bilden kann. Der Ioneneingang kann an einem Kopf des Massenspektrometers vorgesehen sein. Der Kopf kann insbesondere einen kegel - oder kegelstumpfförmigen Abschnitt aufweisen, an dessen Spitze der Ioneneingang vorgesehen sein kann, insbesondere zentriert auf einer Deckfläche des Kegelstumpfs.

Ein erfindungsgemässes Analyseverfahren umfassend Flüssigchromatographie mit nachgeschalteter Massenspektrometrie kann die Merkmale von Anspruch 13 aufweisen. Das Verfahren kann unter Verwendung einer Elektrospray-Probenquelle nach und/oder eines Massenspektroskopie-Systems wie oben beschrieben durchgeführt werden, oder unter Verwendung ausgewählter Merkmale und/oder Elemente desselben. Insbesondere kann eine MS-Potentialplatte vorgesehen sein oder werden, um das elektrische Feld im Bereich zwischen Ioneneingang und Ionenspray-Spitze der Chromatographiesäule an der aktiven Position und im Bereich um die und/oder hinter der lonenspray-Spitze der Chromatographiesäule an der inaktiven Position zu erzeugen bzw. bereitzustellen. Die MS-Potentialplatte kann auf das gleiche elektrische Potential gebracht werden wie der Ioneneingang oder ein Kopf des Massenspektrometers, insbesondere durch Vorsehen einer elektrisch leitenden Verbindung. Zwischen der MS-Potentialplatte einerseits und den Ionenspray-Spitzen und/oder den mobilen Phasen andererseits kann eine Hochspannung angelegt werden.

Ferner kann ein Schutzgas von einem Bereich um den Ioneneingang herum entgegen der Längsrichtung und/oder in Richtung der Ionenspray-Spitze der Chromatographiesäule an der aktiven Position geleitet werden, insbesondere durch eine entlang eines Randes der ersten Öffnung der MS-Potentialplatte, insbesondere entlang des gesamten Randes besagter erster Öffnung, ausgebildete Austrittsöffnung sein. Die Austrittsöffnung und/oder die MS-Potentialplatte können dabei so platziert sein oder werden, dass sich die Austrittsöffnung hinter dem MS-Ioneneingang befindet.

Ferner kann eine Abzugsvorrichtung oder ein Anschluss an eine Abzugsvorrichtung vorgesehen werden, um Ionen aus dem Elektrospray und/oder ionisiertes Probenmaterial, welche bzw. welches aus der inaktiven Chromatographiesäule austreten, abzuleiten.

Die mobilen Phasen können unter Verwendung von oder durch eine Probenversorgungs-Vorrichtung wie weiter oben beschrieben zugeführt werden.

Sofern nicht anders angegeben, kann eine elektrisch leitende Verbindung, insbesondere zwischen zwei beliebigen Einheiten, einschließlich insbesondere Knoten, Punkten, Anschlüssen, Elementen, Vorrichtungen usw. oder Kombinationen davon, wie in dieser Patentanmeldung verwendet, eine Verbindung bezeichnen, wie sie insbesondere durch einen Draht, ein Kabel, eine Stromschiene, eine Leiterbahn, eine Spur oder eine Linie auf z. B. einer (gedruckten) Leiterplatte, Lot usw. hergestellt wird. Die elektrisch leitende Verbindung ist vorzugsweise zumindest im Wesentlichen direkt, insbesondere frei von diskreten Elementen, wie insbesondere Widerständen, Kondensatoren, Induktoren oder anderen passiven oder aktiven Elementen oder Vorrichtungen, die zwischen den verbundenen Einheiten angeschlossen sind. Die elektrisch leitende Verbindung weist somit zumindest im Wesentlichen vernachlässigbare Widerstände, Kapazitäten oder Induktivitäten auf, vorzugsweise zumindest im Wesentlichen keine Widerstände, Kapazitäten oder Induktivitäten. Insbesondere sind Widerstand, Kapazität und/oder Induktivität der elektrisch leitenden Verbindung ausschließlich parasitärer Natur. Ferner sind Widerstand, Kapazität und Induktivität der elektrisch leitenden Verbindung signifikant kleiner (vorzugsweise um einen Faktor von 1/100, 1/1000 oder 1/10000) als Widerstände, Kapazitäten und Induktivitäten von Widerständen, Kondensatoren bzw. Induktivitäten, die durch die elektrisch leitende Verbindung verbunden sind und/oder von einer elektrischen Schaltung oder einem Netzwerk umfasst werden, welche bzw. welches die elektrisch leitende Verbindung umfasst.

Wenn nicht anders angegeben, ist eine elektrische Verbindung identisch mit einer elektrisch leitenden Verbindung, wie sie oben definiert ist.

Wenn nicht anders angegeben, besteht zwischen zwei elektrisch verbundenen oder elektrisch leitend verbundenen Einheiten, insbesondere Knoten, Punkten, Anschlüssen, Elementen, Vorrichtungen usw. oder Kombinationen davon, eine Verbindung, eine elektrische leitende Verbindung wie oben definiert.

### Wege zur Ausführung der Erfindung

Im Folgenden wird anhand der beiliegenden Zeichnung ein bevorzugtes Ausführungsbeispiel der Erfindung beschrieben.

Es enthalten
Fig. 1 eine schematische Darstellung eines Ausführungsbeispiels der erfindungsgemässen Elektrospray-Probenquelle in Aufsicht;
Fig. 2a eine schematische Darstellung des Ausführungsbeispiels aus Fig. 1 in seitlicher Ansicht, insbesondere einen Säulen Ofen mit Robotik Antrieb;
Fig. 2b eine schematische Darstellung der Adaptereinheit aus Fig. 2a in Längsrichtung L betrachtet;
Fig. 3 eine schematische Darstellung einer exemplarischen Positioniereinheit, insbesondere einen Robotik Antrieb mit MS Adapter;
Fig. 4 eine schematische Darstellung von Teilen der Elektrospray-Probenquelle aus Fig. 2 in seitlicher Ansicht; und
Fig. 5 eine schematische Darstellung eines Kopfs eines Massenspektrometers mit einem MS Ioneneingang.

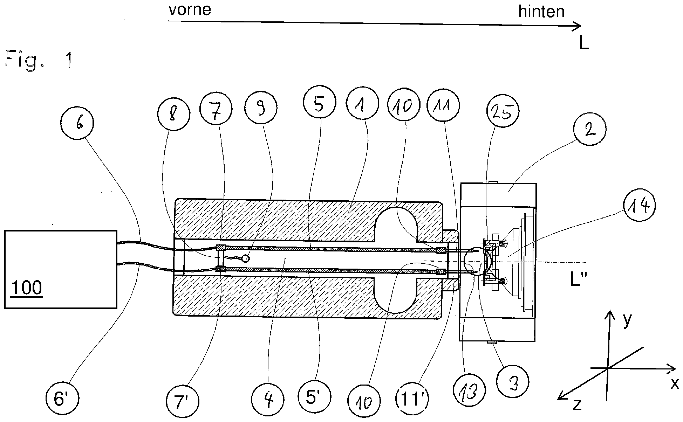

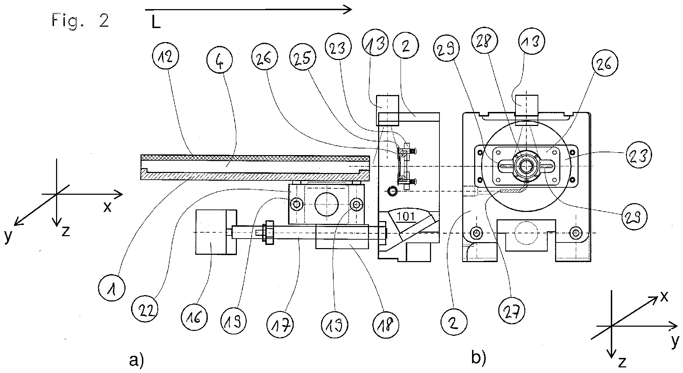

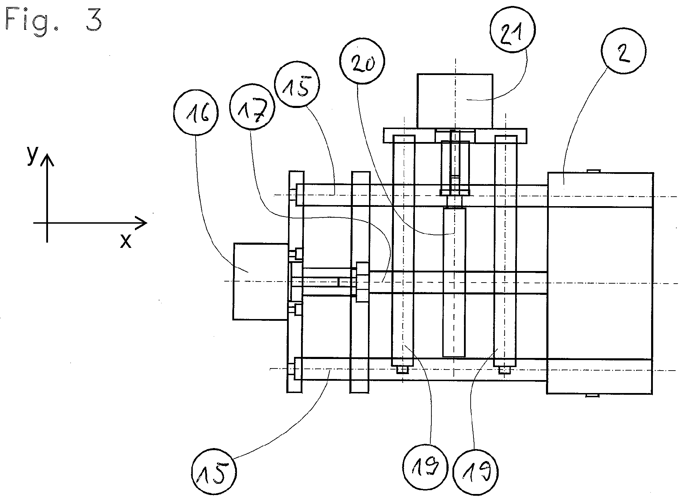

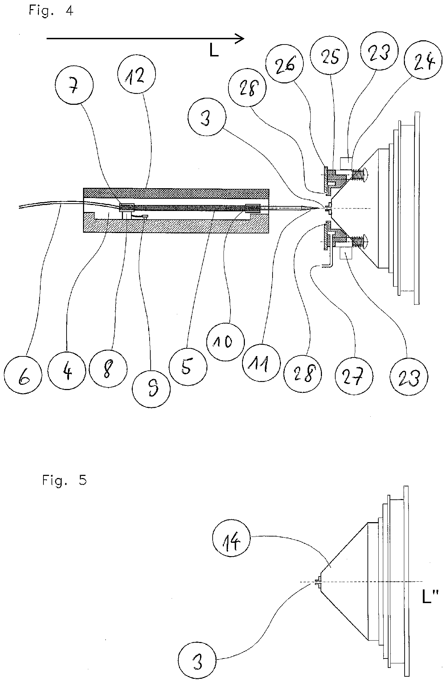

Die Fig.1 zeigt eine Heizvorrichtung in Form eines Säulen-Ofens 1, mit einer Adaptereinheit in Form eines MS Adapter 2 und einem MS Ioneneingang 3. Im einem Innenraum 4 des Säulenofens Raum, befinden sich zwei Chromatographiesäulen 5, 5', mit an eine Probenversorgungs-Vorrichtung 100 angeschlossenen Probenzuleitungen 6, 6' und Säulen Eingang Verbindungsstücken 7, welche über eine Halterung 8 mit dem Hochspannung Anschluss 9 verbunden ist. Chromatographiesäulen-Ausgänge 10 sind direkt mit Ionenspray-Spitzen 11, 11' verbunden. Der Säulen Ofen Raum ist mit einem Deckel 12 (cf. Fig.2, Fig.4) verschliessbar bzw. verschlossen. Mittels einer Kamera 13 (cf. Fig.1, Fig.2) wird die jeweilige Position der Ionenspray- Spitze 11 oder 11' vor dem MS Ioneneingang 3 erfasst. Der MS Ioneneingang 3 liegt auf einem identischen elektrischen Potenzial wie ein Kopf 14 (Fig.1, Fig.5) eines Massenspektrometers, wohingegen die Ionenspray-Spitzen 11, 11 ` ein elektrisches Potenzial des Hochspannung-Anschlusses 9
annehmen. Die Fig. 3 zeigt eine Positioniervorrichtung in Gestalt eines x-y-Robotik-Antriebs mit X-Führungsstangen 15, welche fest mit dem MS Adapter 2 verbunden sind. Mittels eines X-Motors 16 und einer X-Spindel 17 kann der X-Schlitten 18 (cf. Fig. 2) in der X-Richtung bewegt werden. Die Y-Führungsstangen 19 sind fest mit dem X-Schlitten 18 verbunden. Mittels eines Y-Motors 20 (cf. Fig. 3) und einer Y-Spindel 21 (cf. Fig. 3) kann ein Y-Schlitten 22 (cf. Fig. 2) in y-Richtung bewegt werden. Der Säulen Ofen 1 ist fest in x-y-Richtung mit dem Y-Schlitten 22 (cf. Fig.2), wobei eine Montagehöhe bezüglich einer z-Achse mittels Schrauben einstellbar ist. Fig.2 und Fig.4, zeigen eine Isolations-Glasplatte 23, welche fest mit dem MS Adapter 2 verbunden ist. Auf der Isolations-Glasplatte 23 ist mittels einer Federaufhängung 24 ein Kontaktierungselement in Form eines metallischen Begasungsrings 25 zusammen mit einer MS-Potentialplatte 26 montiert, so dass, sobald der MS Adapter 2 an ein Massenspektrometer mit Ioneneingang 3 am Kopf 14 gekoppelt wird, die MS-Potenzial-Platte 26 das elektrische Potenzial des Ioneneingangs 3 bzw. des Kopfs 14 annimmt.

Über eine elektrische nichtleitende Zuleitung 27 (cf. Fig.2, Fig.4) kann ein Schutzgas eingeblasen werden, welches bei einer Ringdüse in Form eines kreisförmigen Schlitzes 28 austreten und einen Bereich einer Ionenspray-Spitze 11, 11', welche sich vor dem Ioneneingang 3 befindet, fluten kann. Ionenspray aus der (anderen) Ionen Spray Spitze 11 `, 11, welche sich bezüglich der y-Richtung neben, insbesondere in einer Entfernung von, dem Ioneneingang 3, befindet, kann über zweite Öffnungen in Form von Schlitzen 29 (cf. Fig. 2) in der MS-Potenzialplatte 26 abgesaugt werden. Ein Auffangbereich 101 für besagtes Ionenspray unterhalb der MS-Potenzialplatte 26 kann an einen Abzug oder eine Abzugsvorrichtung angeschlossen werden, um dieses abzuleiten.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Um die Erfindung nicht zu verklären, können in gewissen Fällen wohlbekannte Strukturen und Techniken nicht im Detail gezeigt und beschrieben sein. Es versteht sich, dass Fachleute Änderungen und Abwandlungen machen können, ohne den Umfang der folgenden Ansprüche zu verlassen. Insbesondere deckt die vorliegende Erfindung weitere Ausführungsbeispiele mit irgendwelchen Kombinationen von Merkmalen ab, die von den explizit beschriebenen Merkmalskombinationen abweichen können.

Die vorliegende Offenbarung umfasst auch Ausführungsformen mit jeglicher Kombination von Merkmalen, die vorstehend oder nachfolgend zu verschiedenen Ausgestaltungen oder Ausführungsformen genannt oder gezeigt sind. Sie umfasst ebenfalls einzelne Merkmale in den Figuren, auch wenn sie dort im Zusammenhang mit anderen Merkmalen gezeigt sind und/oder vorstehend oder nachfolgend nicht genannt sind. Auch können die in den Figuren und der Beschreibung beschriebenen Alternativen von Ausführungsformen und einzelne Alternativen deren Merkmale vom Erfindungsgegenstand beziehungsweise von den offenbarten Gegenständen ausgeschlossen sein. Die Offenbarung umfasst Ausführungsformen, die ausschliesslich die in den Ansprüchen beziehungsweise in den Ausführungsbeispielen beschriebenen Merkmale umfasst, sowie auch solche, die zusätzliche andere Merkmale umfassen.

Im Weiteren schliesst der Ausdruck "umfassen" und Ableitungen davon andere Elemente oder Schritte weder aus, noch ist ein Vorhandensein anderer Elemente oder Schritte notwendigerweise erforderlich oder impliziert. Ebenfalls schliesst der unbestimmte Artikel "ein" bzw. "eine" und Ableitungen davon eine Vielzahl nicht aus. Die Funktionen mehrerer in den Ansprüchen aufgeführter Merkmale können durch eine Einheit beziehungsweise einen Schritt erfüllt sein. Die Begriffe "im Wesentlichen", "etwa", "annähernd", "näherungsweise", "ungefähr" sowie deren Synonyme können in Verbindung mit einer Eigenschaft beziehungsweise einem Wert insbesondere auch genau die Eigenschaft beziehungsweise genau den Wert bezeichnen. Die Begriffe "etwa", "annähernd", "näherungsweise", "ungefähr", sowie deren Synonyme, im Zusammenhang mit einem gegebenen Zahlenwert oder -bereich können sich auf einen Wert beziehungsweise Bereich beziehen, der innerhalb 20%, innerhalb 10%, innerhalb 5% oder innerhalb 2% des gegebenen Werts beziehungsweise Bereichs liegt. Alle Bezugszeichen in den Ansprüchen sind nicht als den Umfang der Ansprüche einschränkend zu verstehen. Eine Angabe, wonach *a* ≈ *b* gilt oder a annähernd, etwa, näherungsweise oder ungefähr gleich b ist, kann dahingehend zu verstehen sein, dass |*a-b*|/(|*a*|+|*b*|) < 0,2, vorzugsweise |*a-b*|/(|*a*|+|*b*|) < 0,05, höchst vorzugsweise |*a-b*|/(|*a*|+|*b*|) < 0,01 gilt, wobei *a* und *b* beliebige, an irgendeiner Stelle in diesem Dokument definierte und/oder beschriebene oder anderweitig dem Fachmann bekannte Variablen oder Grössen repräsentieren kann. Eine Angabe, wonach *a* » *b* gilt oder a wesentlich grösser ist als b, kann bedeuten, dass *a* > 5*b*, vorzugsweise *a* > 10*b,* gilt. Eine Angabe, wonach *a* « *b* gilt oder a wesentlich kleiner ist als b kann bedeuten dass 5*a* < *b* gilt, vorzugsweise 10*a* < *b.*

Eine Angabe «wenige» kann insbesondere mindestens zwei, vorzugsweise mindestens drei und/oder maximal fünf bedeuten. Eine Angabe «einige» kann insbesondere mindestens drei, vorzugsweise mindestens fünf und/oder maximal neun bedeuten.

Dass ein Merkmal oder eine Eigenschaft, beispielsweise eine spezifische, insbesondere geometrische, Form, zumindest näherungsweise oder im Wesentlichen ausgebildet, vorgesehen oder vorhanden ist, kann ferner insbesondere bedeuten, dass Fertigungsvorgaben existieren, welche eine Vorgabe vorsehen, gemäss welcher das Merkmal entsprechend auszubilden ist, wobei eine Abweichung von der Vorgabe insbesondere im Rahmen üblicher Fertigungstoleranzen resultieren kann.

Dass ein Element oder Merkmal in einer Richtung ausgedehnt ist, in einer Richtung verläuft oder sich in einer Richtung erstreckt, kann insbesondere bedeuten, dass Abmessungen des Elements oder Merkmals in oder bezüglich dieser Richtung grösser sind als in oder bezüglich anderer, insbesondere aller anderer Richtungen, insbesondere orthogonaler Richtungen.

Sofern nicht anders angegeben, kann eine fluid- und/oder druckdichte Verbindung zwischen zwei ein Fluid, insbesondere eine Flüssigkeit oder ein Gas, leitenden, führenden, bevorratenden und/oder speichernden Elementen wie insbesondere Leitungen, Rohren, Behältern, Rückhaltevolumen, etc., eine Verbindung bezeichnen, durch welche Fluid verlustfrei, insbesondere ohne durch die oder im Bereich der Verbindung auszutreten, von einem Element zum anderen strömen und/oder geleitet werden kann, insbesondere unter den üblicherweise, vor allem in einem Betriebszustand einer die Elemente umfassenden Apparatur, herrschenden, statischen und/oder dynamischen Fluiddrücken. In analoger Weise kann ein fluid- und/oder druckdichter Verschluss oder eine fluid- und/oder druckdichte (Ab-)dichtung ein Element, insbesondere eine Öffnung eines Elements, verschliessen, ohne dass Fluid durch den oder im Bereich des Verschlusses bzw. der (Ab-)dichtung austreten kann. Eine Fluidverbindung kann insbesondere eine fluid- und/oder druckdichte Verbindung sein.

Sämtliche vorstehen zitierten Dokumente, Artikel und Ähnliches, insbesondere Patentdokumente und Wikipedia-Artikel, werden hiermit in vollem Umfang mittels Verweisung in die vorliegende Patentanmeldung einbezogen.

Die Erfindung gemäss der vorstehenden Beschreibung kann insbesondere in Form der und/oder in Kombination mit den nachstehenden Ausführungsbeispielen realisiert werden:
1. Atmospheric Pressure Inlet (API) Massen Spektrometer (MS) Quelle, dadurch gekennzeichnet, dass mehrere Chromatografie Säulen mit Ionen Spray Spitzen in einem Säulenofen fixiert werden und mittels einer XY Robotik nacheinander vor dem MS Ionen Eingang positioniert werden, das für den Spray notwendige elektrische Potenzial bei allen Chromatografie Säulen im Säulenofen angelegt wird und die Sprays welche sich nicht vor dem MS Ionen Eingang befinden abgesaugt werden.
2. Vorrichtung oder Verfahren nach Ausführungsbeispiel 1, dadurch gekennzeichnet, dass durch die Kopplung der MS Quelle mit dem MS das elektrische Potenzial vom MS Ionen Eingang auf eine Isolierte Kontaktplatte in der MS Quelle überträgt um alle Sprays aufrecht zu erhalten.
3. Vorrichtung oder Verfahren nach Ausführungsbeispiel 1 oder 2, dadurch gekennzeichnet, dass ein Schutzgas im Bereich des MS Ionen Eingang entgegen der Sprayrichtung dem Spray vor dem MS Ionen Eingang zugeführt.
4. Vorrichtung oder Verfahren nach Ausführungsbeispiel 3, dadurch gekennzeichnet, dass das Schutzgas mittels einem Ionenfilter/Aktivkohlefilter gereinigt wird.
5. Vorrichtung oder Verfahren nach Ausführungsbeispiel 3 oder 4, dadurch gekennzeichnet, dass Schutzgas vorgeheizt wird.
6. Vorrichtung oder Verfahren nach einem der vorangehenden Ausführungsbeispiele, dadurch gekennzeichnet, dass mittels Bilderkennung die optimale Sprayposition vor dem MS Ionen Eingang automatisch angefahren wird.

## Patentansprüche

1. Elektrospray-Probenquelle zur Anbindung an ein Massenspektrometer, insbesondere mit einem Atmospheric Pressure Inlet, API, umfassend:
a. eine erste Chromatographiesäule (5), die sich parallel zu einer Längsrichtung (L) erstreckt;
b. eine zweite Chromatographiesäule (5'), die sich zumindest im Wesentlichen parallel zu der Längsrichtung erstreckt;
c. wobei an der ersten und zweiten Chromatographiesäule je ein Probeneingang vorgesehen ist, an welchem eine Probenzuleitung (6, 6') anschliessbar ist, insbesondere mittels eines Verbindungsstücks (7, 7');
d. wobei an der ersten und zweiten Chromatographiesäule je eine Ionenspray-Spitze (11, 11'), insbesondere je eine elektrisch leitfähige Kapillare, am und/oder als Probenausgang vorgesehen ist;
e. eine Positioniervorrichtung, die dazu ausgelegt ist, die erste und/oder zweite Chromatographiesäule in mindestens einer Richtung orthogonal zur Längsrichtung zu verschieben und/oder positionieren, um insbesondere wahlweise und/oder abwechselnd die erste oder zweite Chromatographiesäule an einer aktiven Position vor und/oder gegenüber einem loneneingang (3) des Massenspektrometers zu positionieren, und die jeweils andere Chromatographiesäule an einer ersten oder zweiten inaktiven Position zu positionieren, welche bezüglich mindestens einer Richtung orthogonal zur Längsrichtung relativ zum Ioneneingang beabstandet ist;
f. eine Heizvorrichtung, insbesondere ein Ofen (1), zum Erwärmen und/oder Temperieren der beiden Chromatographiesäulen;
g. ein Spannungsanschluss (9), welcher insbesondere an der Heizvorrichtung vorgesehen ist, wobei der Spannungsanschluss insbesondere dazu ausgelegt ist, eine Hochspannung zwischen den Ionenspray-Spitzen und dem Ioneneingang und/oder zwischen einer mobilen Phase in den Chromatographiesäulen und dem Ioneneingang anzulegen.

2. Elektrospray-Probenquelle nach Anspruch 1, ferner umfassend eine Probenversorgungs-Vorrichtung (100), die dazu ausgelegt ist, der ersten und der zweiten Chromatographiesäule zumindest teilweise gleichzeitig eine erste bzw. zweite mobile Phase zuzuführen, wobei jede mobile Phase insbesondere ein Eluent, Probenmaterial, eine Equlibrierflüssigkeit, eine Kalibrierlösung und/oder eine Reinigungslösung umfassen kann, und die Zuführung der ersten und zweiten mobilen Phase insbesondere über eine erste bzw. eine zweite Probenzuleitung (6, 6') erfolgt, die an den jeweiligen Probeneingang der ersten bzw. zweiten Chromatographiesäule angeschlossen ist.

3. Elektrospray-Probenquelle nach Anspruch 1 oder 2, welche ferner eine Abzugsvorrichtung umfasst oder an eine Abzugsvorrichtung anschliessbar ist, die dazu ausgelegt ist, aus der ersten oder zweiten Chromatographiesäule austretendes Elektrospray abzuleiten, insbesondere wenn diese an der ersten oder zweiten inaktiven Position positioniert ist.

4. Elektrospray-Probenquelle nach einem der vorangehenden Ansprüche, wobei beide Chromatographiesäulen in einem beheizten Innenraum (4) der Heizvorrichtung, insbesondere des Ofens montiert sind, und die Positioniervorrichtung dazu ausgelegt ist, die Heizvorrichtung in mindestens einer Richtung orthogonal zur Längsrichtung zu verschieben, und wobei die Positioniervorrichtung insbesondere dazu ausgelegt ist, die erste und/oder zweite Chromatographiesäule und/oder die Heizvorrichtung bezüglich der Längsrichtung zu verschieben und/oder positionieren.

5. Elektrospray-Probenquelle nach einem der vorangehenden Ansprüche, ferner umfassend eine Adaptereinheit (2), welche dazu ausgelegt ist, in einer definierten Position relativ zum Ioneneingang eines Massenspektrometers an diesem befestigt, insbesondere angeschraubt und/oder angeflanscht zu werden.

6. Elektrospray-Probenquelle nach dem vorangehenden Anspruch, wobei die Positioniervorrichtung einen Grundkörper (15) umfasst, der starr mit der Adaptereinheit (2) verbindbar oder verbunden ist, sowie ein relativ zum Grundkörper bewegliches, insbesondere beweglich gelagertes, Trägerelement, dessen Position relativ zum Grundkörper veränderbar, insbesondere mittels mindestens eines Antriebs (16, 20) verstellbar, ist, wobei das Trägerelement starr mit der Heizvorrichtung und/oder den beiden Chromatographiesäulen verbunden bzw. verbindbar ist.

7. Elektrospray-Probenquelle nach einem der vorangehenden Ansprüche, ferner umfassend eine MS-Potentialplatte (26), insbesondere als Teil der Adaptereinheit, welche
a. elektrisch leitend mit dem Ioneneingang verbindbar ist, und welche
b. eine (erste) Öffnung, insbesondere eine zumindest annähernd kreisförmige Öffnung, umfasst, welche vor dem, hinter dem und/oder um den loneneingang herum positioniert ist, wenn die Elektrospray-Probenquelle an einen Massenspektrometer angebunden ist, so dass Ionen aus dem Elektrospray und/oder ionisiertes Probenmaterial durch die Öffnung hindurch in den Ioneneingang und/oder in einen Innenraum des Massenspektrometers gelangen können.

8. Elektrospray-Probenquelle nach dem vorangehenden Anspruch, **dadurch gekennzeichnet, dass** entlang eines Randes der (ersten) Öffnung, insbesondere entlang des gesamten Randes der Öffnung, eine Austrittsöffnung (28) gebildet ist, durch welche ein Schutzgas in einer Richtung entgegen der Längsrichtung (L) geleitet, insbesondere geblasen werden kann, wobei das Schutzgas insbesondere einen Hohlstrahl bildet.

9. Elektrospray-Probenquelle nach einem der vorangehenden Ansprüche, ferner umfassend einen Aktivkohlefilter oder einen Ionenfilter zur Reinigung des Schutzgases, und/oder eine Heizvorrichtung zum Vorheizen des Schutzgases.

10. Elektrospray-Probenquelle nach einem der vorangehenden Ansprüche, wobei die MS-Potentialplatte (26) mindestens eine, insbesondere schlitzförmige, in mindestens einer Richtung orthogonal zur Längsrichtung von der ersten Öffnung beabstandete weitere (zweite) Öffnung (29) umfasst, so dass Ionen aus dem Elektrospray und/oder ionisiertes Probenmaterial, welche bzw. welches aus der an der ersten inaktiven Position positionierten Chromatographiesäule austreten, durch die zweite Öffnung in einen Bereich hinter der MS-Potentialplatte (26) gelangen, wo sie insbesondere mittels der Abzugsvorrichtung abgeleitet werden können.

11. Elektrospray-Probenquelle nach einem der vorangehenden Ansprüche, wobei ein Kontaktierungselement (25) vorgesehen ist, welches eine elektrisch leitende Verbindung zwischen MS-Potentialplatte (26) und Ioneneingang erstellt, wenn die Elektrospray-Probenquelle an einen Massenspektrometer angebunden ist, insbesondere die Adaptereinheit am Massenspektrometer angeschraubt und/oder angeflanscht ist, wobei das Kontaktierungselement insbesondere als Teil des Adapterelements ausgebildet sein kann, insbesondere mit dem Adapterelement fest verbunden oder verbindbar sein kann.

12. Massenspektroskopie-System mit einer Elektrospray-Probenquelle nach einem der Ansprüche 5 bis 11 und einem Massenspektrometer, insbesondere mit einem Atmospheric Pressure Inlet, API, wobei die Adaptereinheit (2) in einer definierten Position relativ zum Ioneneingang eines Massenspektrometers an diesem befestigt, insbesondere angeschraubt und/oder angeflanscht, ist.

13. Ein Analyseverfahren umfassend Flüssigchromatographie mit nachgeschalteter Massenspektrometrie, insbesondere unter Verwendung einer Elektrospray-Probenquelle nach einem der Ansprüche 1 bis 11 oder einem Massenspektroskopie-System nach Anspruch 12, wobei
a. zunächst
i. eine erste Chromatographiesäule (5), die sich parallel zu einer Längsrichtung (L) erstreckt, an einer aktiven Position positioniert wird, welche sich vor und/oder gegenüber von einem Ioneneingang (3) des Massenspektrometers befindet;
ii. eine zweite Chromatographiesäule (5'), die sich zumindest im Wesentlichen parallel zu der Längsrichtung erstreckt, an einer ersten oder zweiten inaktiven Position positioniert wird, welche bezüglich mindestens einer Richtung orthogonal zur Längsrichtung relativ zum Ioneneingang beabstandet ist;
b. anschliessend
i. der Chromatographiesäule (5, 5') an der aktiven Position eine erste oder aktive mobile Phase zugeführt wird, welche insbesondere ein Eluent und ein Probenmaterial umfasst; und zumindest teilweise gleichzeitig
ii. der Chromatographiesäule (5, 5') an der inaktiven Position eine zweite oder inaktive mobile Phase zugeführt wird, die insbesondere eine Equlibrierflüssigkeit, eine Kalibrierlösung und/oder eine Reinigungslösung umfasst
iii. beide mobile Phasen zumindest teilweise gleichzeitig einer Elektrospray-Ionisation unterworfen werden, wobei ein aktives Elektrospray erzeugt wird, welches aus einer Ionenspray-Spitze (11, 11') der Chromatographiesäule (5, 5') an der aktiven Position austritt, sowie ein inaktives Elektrospray, welches aus einer Ionenspray-Spitze (11', 11) der Chromatographiesäule (5', 5) an der inaktiven Position austritt;
iv. Ionen aus dem aktiven Elektrospray einem Ioneneingang (3) des Massenspektrometers zugeführt werden, insbesondere durch ein elektrisches Feld in einem Bereich zwischen Ioneneingang und lonenspray-Spitze (11, 11') der Chromatographiesäule (5, 5') an der aktiven Position;
v. Ionen aus dem inaktiven Elektrospray vom Ioneneingang des Massenspektrometers ferngehalten werden, insbesondere durch ein elektrisches Feld in einem Bereich um die und/oder hinter der lonenspray-Spitze (11, 11') der Chromatographiesäule (5, 5') an der inaktiven Position
c. zu einem späteren Zeitpunkt
i. die zweite Chromatographiesäule (5') an der aktiven Position positioniert wird, insbesondere mittels einer Positioniervorrichtung, insbesondere gemäss Merkmal e. von Anspruch 1;
ii. die erste Chromatographiesäule (5') an der ersten, zweiten oder einer weiteren inaktiven Position positioniert wird, insbesondere mittels der Positioniervorrichtung;
iii. die Schritte b.i. bis b.v wiederholt werden.

14. Analyseverfahren nach Anspruch 13, wobei ein Schutzgas von einem Bereich um den Ioneneingang (3) herum entgegen der Längsrichtung (L) und/oder in Richtung der Ionenspray-Spitze der Chromatographiesäule (5, 5') an der aktiven Position geleitet wird, insbesondere in Form eines Hohlstrahls, welcher den loneneingang und/oder besagte Ionenspray-Spitze umgibt, insbesondere in Form eines Gasvorhangs.
